# FASCICULE DE BREVET EUROPEEN

(11) **EP 1 336 546 B1**
(45) Date de publication et mention de la délivrance du brevet: **06.10.2004**
(21) Numéro de dépôt: 03290311.4
(22) Date de dépôt: 06.02.2003
(51) Int. Cl.: B62D 1/19

(54) **Dispositif de réglage d'un système d'absorption d'énergie d'une colonne de direction de véhicule automobile**
Einstell- Einrichtung eines Energieaufnehme-Systems einer Kraftfahrzeuglenksäule
Adjusting device of an energy absorption system of a motor vehicle steering column

(30) Priorité: 15.02.2002 FR 0201966
(43) Date de publication de la demande: 20.08.2003
(73) Titulaire: NACAM FRANCE S.A., 41000 Vendome (FR)
(72) Inventeur: Laisement, André, 41290 La Chapelle Enchérie (FR); Carrer, Alain, 41100 Thoré la Rochette (FR); Gatti, Jean-Marc, 41100 Vendome (FR)
(74) Mandataire: Cabinet Martinet & Lapoux

(56) Documents cités:
- EP-A- 1 176 082

## Description

La présente invention se rapporte à un dispositif de réglage d'un système d'absorption d'énergie d'une colonne de véhicule automobile. La colonne de direction est montée dans un ensemble support qui est relié et solidarisé à la structure du véhicule par des moyens de fixation, avec au moins une capsule d'absorption d'énergie disposée sur l'un des moyens de fixation.

Il existe des colonnes de direction qui ont une ou plusieurs capsules d'absorption d'énergie qui sont montées directement selon l'/les axe(s) de fixation (voir US-A-5 775 172). L'absorption d'énergie de chaque capsule dépend donc du serrage de l'ensemble support sur la structure du véhicule.

Dans la fabrication en grande série, comme c'est le cas dans l'industrie automobile, il est difficile de réaliser et de garantir un serrage précis et constant de la fixation et donc de la pression de serrage de la ou des capsules d'absorption d'énergie. Comme l'absorption d'énergie de ces capsules dépend directement de ce serrage, il en résultera une absorption d'énergie imprécise. Mais dans les véhicules automobiles actuels et futurs, il est de plus en plus impératif que les caractéristiques de sécurité passive soient précises et efficaces.

Le but de la présente invention est de proposer un dispositif de réglage d'un système d'absorption d'énergie qui évite les inconvénients décrits ci-dessus, et qui permet un réglage facile et précis de la valeur demandée de l'absorption d'énergie.

Selon une mode de réalisation, le dispositif de réglage d'un système d'absorption d'énergie se rapporte à une colonne de direction de véhicule automobile. La colonne de direction est montée dans un ensemble support qui est relié et solidarisé à la structure du véhicule par plusieurs moyens de fixation, ayant chacun un axe de fixation respectif. Dans cette réalisation, au moins l'un desdits moyens de fixation comporte au moins une capsule d'absorption d'énergie qui est disposée dans ledit ensemble support selon son axe de tenue. Ladite au moins une capsule d'absorption d'énergie est serrée dans ledit ensemble support à l'aide de moyens d'assemblage, l'axe de fixation et l'axe de tenue coïncidant. Lesdits moyens d'assemblage sont indépendants dudit moyen de fixation respectif de manière à effectuer le réglage du serrage pour avoir le serrage voulu desdits moyens d'assemblage en vue d'obtenir l'absorption d'énergie demandée, c'est-à-dire le réglage du serrage de ladite au moins une capsule d'absorption d'énergie étant indépendant de la valeur du serrage dudit moyen de fixation de l'ensemble support sur la structure du véhicule.

Avantageusement selon l'invention, au moins l'un des moyens de fixation comporte deux capsules d'absorption d'énergie.

Selon l'invention, les moyens d'assemblage comportent une tige de tenue munie à une extrémité d'un épaulement et à son autre extrémité d'une partie filetée, qui reçoit un écrou afin de serrer à la valeur demandée la ou les capsules d'absorption d'énergie sur l'ensemble support. La ou les capsules d'absorption d'énergie sont munies d'un trou de passage de la tige de tenue, afin de pouvoir être montées sur ladite tige de tenue entre l'épaulement et l'écrou. La tige de tenue est traversée par un trou de passage du moyen de fixation correspondant de l'ensemble support sur la structure du véhicule.

Selon une réalisation particulièrement intéressante de l'invention, la tige de tenue a une section circulaire dont le diamètre est légèrement inférieur au diamètre du trou de passage de la capsule ou des capsules d'absorption d'énergie, qui sont ainsi centrées sur ladite tige de tenue. L'épaulement a une section en forme de couronne circulaire dont le diamètre extérieur est sensiblement égal au diamètre extérieur de la périphérie circulaire de la capsule ou des capsules d'absorption d'énergie, et dont le diamètre intérieur est sensiblement égal au diamètre du trou de passage de la capsule ou des capsules. Ladite tige de tenue a une extrémité avec un filetage à pas fin qui reçoit un écrou dont la section a un encombrement sensiblement égal à l'encombrement de l'épaulement, de manière à avoir la même surface de contact avec ladite au moins une capsule et l'écrou ou l'épaulement, ou bien avec les deux capsules.

De plus selon l'invention, la tige de tenue se prolonge du côté de l'épaulement par une portion de manoeuvre avec au moins un trou de manoeuvre sensiblement perpendiculaire à l'axe de tenue, c'est-à-dire à l'axe de fixation ; la périphérie de ladite portion de manoeuvre consistant en une portée cylindrique circulaire, qui guide un enroulement correspondant d'absorption d'énergie.

Enfin dans le but d'améliorer le coût de fabrication, la tige de tenue, l'épaulement et la portion de manoeuvre constituent une seule et même pièce mécanique.

Pour faciliter la mise en place de la capsule ou des capsules d'absorption d'énergie, chaque capsule d'absorption d'énergie est munie d'une excroissance axiale pénétrant dans le trou correspondant de l'ensemble support afin d'éviter tout contact métallique entre des pièces fixes et des pièces mobiles lors du choc.

Le dispositif de réglage selon l'invention a au moins un moyen de fixation qui comporte deux capsules d'absorption d'énergie, chaque capsule étant disposée contre la face correspondante appartenant à l'ensemble support.

Selon une architecture propre à l'invention, la colonne de direction comprend un arbre de direction monté tournant autour d'un axe de direction dans un tube-corps. Le tube-corps est disposé entre deux montants reliés par un élément de raccordement. Les deux montants et l'élément de raccordement font partie de l'ensemble support. Les deux montants sont sensiblement parallèles au plan vertical passant par l'axe de direction. Chaque montant comporte une aile externe qui est sensiblement perpendiculaire audit montant. Sur chacune des ailes externes est aménagé un trou oblong, dont l'axe de la section transversale est l'axe de serrage des capsules d'absorption d'énergie correspondantes, c'est-à-dire l'axe de fixation, ledit trou oblong ayant une forme qui est allongée parallèlement au montant correspondant afin de permettre le déplacement voulu en cas de choc de l'ensemble support.

De plus, chacun des deux trous oblongs est débouchant du côté du volant de direction.

Selon une variante de réalisation de l'invention, les deux ailes appartiennent à une seule et même embase qui est solidarisée par soudure à l'élément de raccordement et à chacun des deux montants, et les moyens de fixation de l'ensemble support sont des vis de fixation.

Enfin selon une architecture de l'invention, et pour chacun des deux axes de fixation, les moyens de fixation, la capsule ou les capsules d'absorption d'énergie et les moyens d'assemblage sont identiques.

Le dispositif de réglage d'un système d'absorption d'énergie d'une colonne de direction selon l'invention présente ainsi l'avantage de permettre un glissement de l'élément support mobile dans l'élément support fixe avec un effort maîtrisé. Le système de fixation des capsules est réglable en usine et il est indépendant du montage sur le véhicule.

Les deux capsules, disposées de chaque côté de la patte en U de l'élément support mobile, sont traversées par une tige munie d'un épaulement dont le diamètre extérieur est sensiblement égal au diamètre extérieur des capsules et le diamètre intérieur sensiblement égal au diamètre intérieur des capsules.

Dans le prolongement du diamètre extérieur servant de centreur auxdites capsules, il est réalisé le filetage à pas fin qui permet d'ajuster le serrage de l'écrou en fonction de l'effort de glissement souhaité.

Le dimensionnement de chacune des tiges permet de fixer la colonne de direction sur le véhicule par des vis de fixation traversant lesdites tiges sans affecter l'effort de glissement de la patte en U préalablement taré.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue longitudinale suivant l'axe d'une colonne de direction de véhicule automobile sur laquelle est adapté un dispositif de réglage selon l'invention d'un système d'absorption d'énergie ;
- la figure 2 est une vue transversale suivant II de la figure 1 ;
- la figure 3 est une coupe partielle suivant le plan III-III de la figure 1,
- la figure 4 est une vue éclatée partielle de la figure 3,
- la figure 5 est une vue de dessous suivant V de l'ensemble support mobile représenté sur la figure 2 ;
- la figure 6 est une coupe suivant les plans VI-VI de la figure 5.

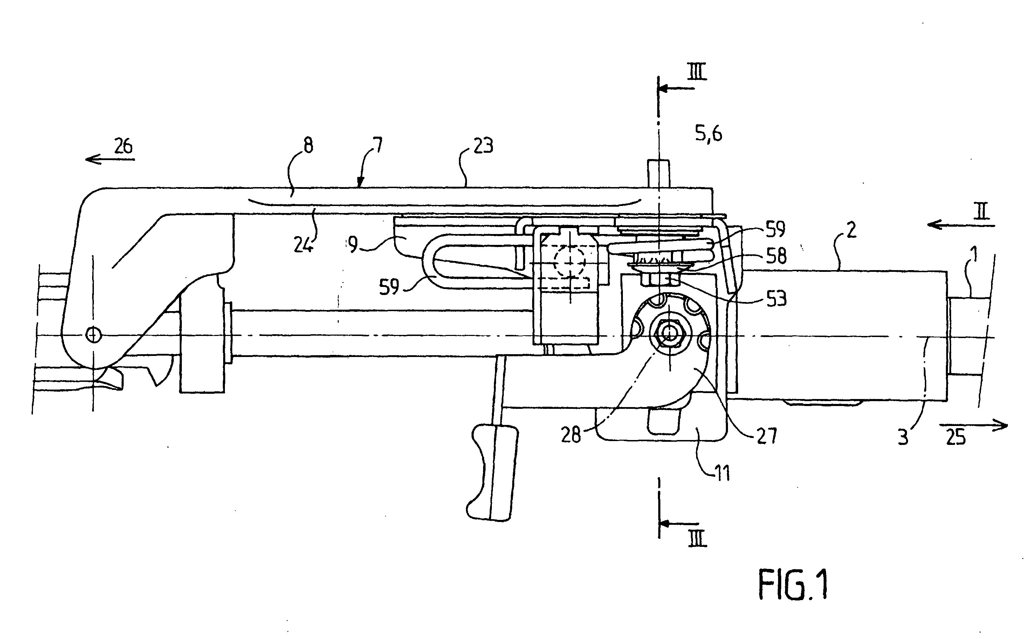

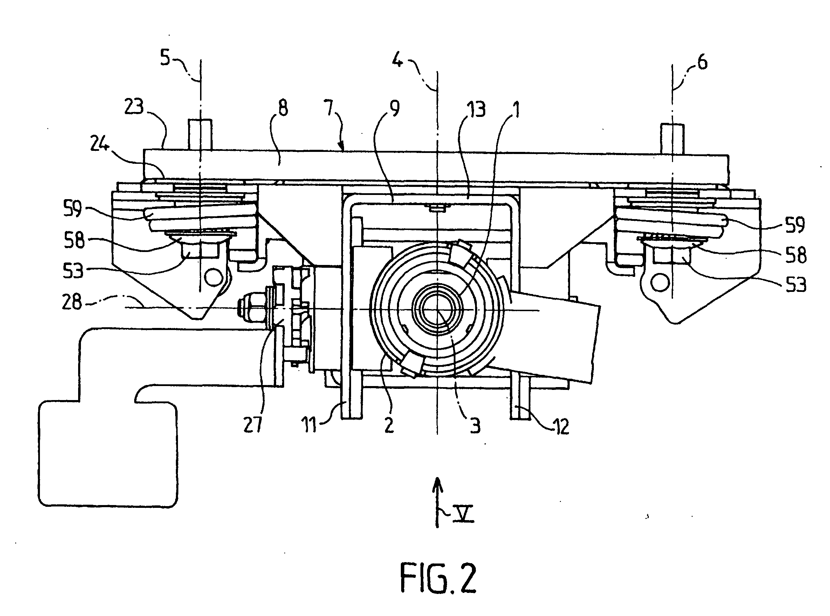

Le dispositif de réglage selon l'invention d'un système d'absorption d'énergie se rapporte plus particulièrement à une colonne de direction de véhicule automobile dont un mode de réalisation est représenté sur les figures 1 et 2.

Quel que soit le mode de réalisation possible de l'invention, la colonne de direction est toujours constituée par un arbre de direction 1, qui tourne autour d'un axe de direction 3. Cet arbre de direction est monté tournant dans un tube corps 2. Le plan vertical passant par l'axe de direction est référencé 4.

Le tube corps 2 est disposé dans un ensemble support 7, qui est fixé à la structure du véhicule 10. Cet ensemble support 7 comporte deux éléments : un élément support fixe 8 et un élément support mobile 9. L'élément support fixe 8 et l'élément support mobile 9 sont reliés à la structure du véhicule 10 et restent fixes par rapport à cette structure 10 lors de l'utilisation normale du véhicule. C'est seulement lors d'un choc que l'ensemble support mobile 9 se déplace par rapport à l'ensemble support fixe 8 par l'intermédiaire du système d'absorption d'énergie.

Dans la suite de la description et pour un même élément, on appellera interne ou intérieur par rapport à l'axe de direction 3 ou par rapport au plan vertical 4 de cet axe de direction 3, ce qui est le plus près de cet axe ou de ce plan, et externe ou extérieur ce qui est le plus éloigné. Pour un même élément, on appellera avant ce qui est le plus près du boîtier de direction 26 non représenté, et arrière ce qui est le plus près du volant de direction 25 également non représenté.

Dans un autre mode de réalisation de l'invention non représenté sur les figures, l'ensemble support comprend uniquement l'élément support mobile qui est fixé directement sur la structure du véhicule.

Le tube corps 2 est disposé entre deux montants 11 et 12, qui sont reliés par un élément de raccordement 13. Les deux montants 11, 12 et l'élément de raccordement 13 font partie de l'élément support mobile 9.

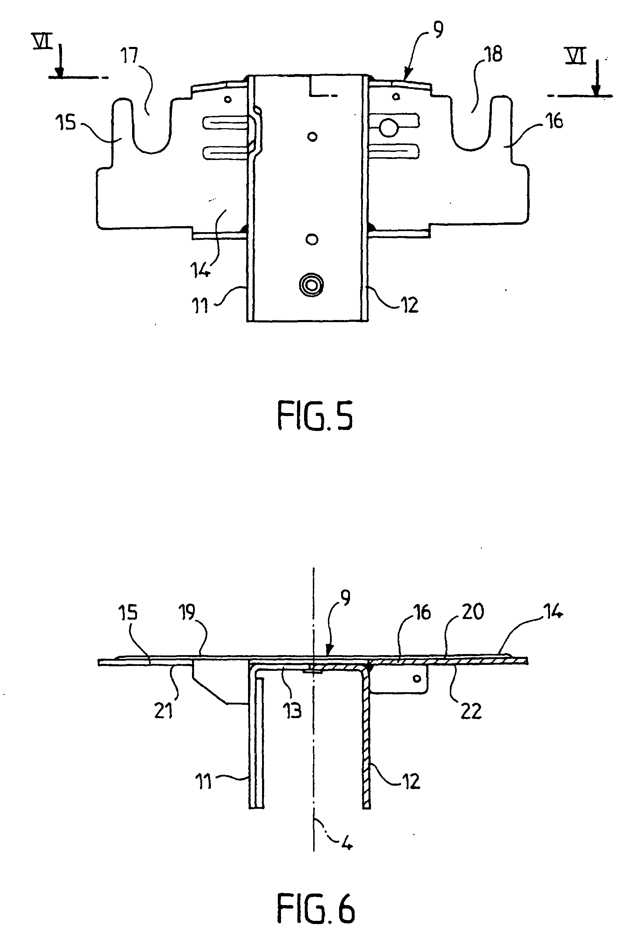

Les deux montants 11, 12 sont sensiblement parallèles au plan vertical 4 passant par l'axe de direction 3, et l'élément de raccordement 13 est sensiblement perpendiculaire audit plan vertical 4. Chaque montant 11, 12 (figures 5 et 6) comporte une aile externe respective 15, 16 qui est sensiblement perpendiculaire au montant correspondant 11, 12 et au plan vertical 4.

Sur chacune des ailes externes 15 et 16 est aménagé un trou oblong correspondant 17 et 18 ayant une forme qui est allongée parallèlement au plan vertical 4, c'est-à-dire au montant correspondant 11, 12. Chacun des deux trous oblongs 17 et 18 est débouchant du côté du volant de direction 25.

Les deux ailes externes 15 et 16 appartiennent à une seule et même embase 14. L'embase 14 est solidarisée par différents cordons de soudure à l'élément de raccordement 13 et à chacun des deux montants 11 et 12.

Dans le cas d'une colonne de direction réglable en position comme représentée sur les figures 1 et 2, le tube corps 2 est serré et bloqué dans la position choisie par un système de serrage 27, dont l'axe de serrage 28 est sensiblement perpendiculaire au plan vertical 4.

L'ensemble support 7 est relié et solidarisé à la structure du véhicule 10 par plusieurs moyens de fixation ayant chacun un axe de fixation respectif. Dans le cas des figures, il y a deux moyens de fixation, qui sont constitués par des vis de fixation 53 et qui ont chacun un axe de fixation respectif 5 et 6.

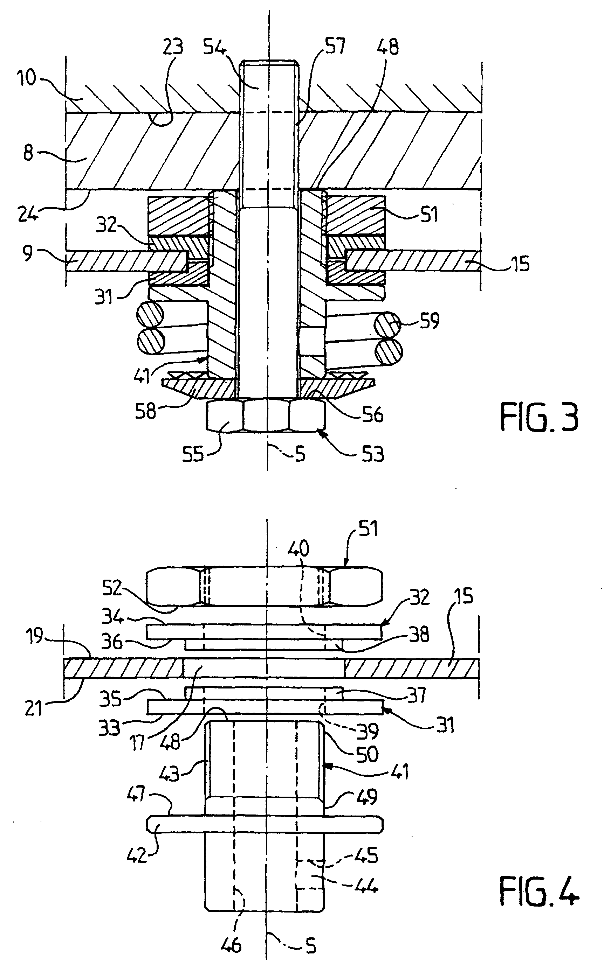

Selon l'invention, au moins l'un des moyens de fixation comporte au moins une capsule d'absorption d'énergie 31, 32 (figures 3 et 4) qui est disposée dans ledit ensemble support 7 selon son axe de tenue, et qui est serrée dans ledit ensemble support 7 à l'aide de moyens d'assemblage. L'axe de fixation et l'axe de tenue sont le même axe, qui est l'axe de fixation 5, 6.

Pour chacun des deux moyens de fixation constitué par la vis de fixation correspondante 53 ayant l'axe de fixation correspondant 5, 6, les moyens d'assemblage comportent une tige de tenue 41. Chaque tige de tenue 41 est munie à une extrémité 49 d'un épaulement 42 et à son autre extrémité 50 d'une partie filetée 43, qui reçoit un écrou 51 afin de serrer à la valeur demandée les deux capsules d'absorption d'énergie 31, 32 sur l'ensemble support 7. Chaque capsule d'absorption d'énergie 31, 32 est munie d'un trou de passage 39, 40 pour la tige de tenue 41, afin de pouvoir être montée sur ladite tige de tenue 41 entre l'épaulement 42 et l'écrou 51. Ladite tige de tenue 41 est traversée par un trou de passage 46 de la vis de fixation 53 correspondante de l'ensemble support 7 sur la structure du véhicule 10.

La tige de tenue 41 a une section circulaire dont le diamètre est légèrement inférieur au diamètre des trous de passage 39 et 40 des deux capsules d'absorption d'énergie 31 et 32, qui sont ainsi centrées sur ladite tige de tenue 41. L'épaulement 42 a une section en forme de couronne circulaire dont le diamètre extérieur est sensiblement égal au diamètre extérieur de la périphérie circulaire des capsules d'absorption d'énergie 31 et 32, et dont le diamètre intérieur est sensiblement égal au diamètre des trous de passage 39 et 40 desdites capsules 31 et 32. La tige de tenue 41 a une extrémité 50 avec un filetage à pas fin 43, qui reçoit l'écrou 51 dont la section a un encombrement sensiblement égal à l'encombrement de l'épaulement 42, de manière à avoir la même surface de contact avec chacune des deux capsules 31 et 32, ou bien lorsqu'il n'y a qu'une seule capsule, avec ladite capsule 31 et l'écrou 51, ou avec la capsule 32 et l'épaulement 42.

La tige de tenue 41 se prolonge du côté de l'épaulement 42 par une portion de manoeuvre 44 avec un trou de manoeuvre 45 sensiblement perpendiculaire à l'axe de tenue, c'est-à-dire l'axe de fixation 5 ou 6.

La tige de tenue 41, l'épaulement 42, et la portion de manoeuvre 44 constituent une seule et même pièce mécanique.

Chaque capsule d'absorption d'énergie 31, 32 est munie d'une excroissance axiale correspondante 37, 38, qui pénètre dans un trou oblong correspondant 17, 18 de l'ensemble support 7.

Ainsi, comme cela est représenté sur les figures 3 et 4, chaque tige de tenue 41 comporte une première capsule d'absorption d'énergie 31, dont une face d'appui 33 s'applique contre la face d'appui 47 de l'épaulement, et dont l'autre face d'appui 35 s'applique contre une face inférieure 21, 22 de l'aile externe 15, 16 correspondante, l'excroissance 37 de ladite capsule 31 s'engageant dans le trou oblong 17, 18 de l'aile externe 15, 16. Chaque trou oblong 17, 18 a une section transversale, dont l'axe est l'axe de fixation 5, 6 correspondant des capsules d'absorption d'énergie 31 et 32, et dont la dimension est légèrement supérieure à celle des excroissances radiales 37 et 38.

De la même manière, chaque tige de tenue 41 comporte une deuxième capsule d'absorption d'énergie 32 dont une face d'appui 36 s'applique contre une face supérieure 19, 20 de l'aile externe 15, 16 correspondante. L'excroissance 38 de ladite capsule 32 s'engage dans le trou oblong 17, 18 de l'aile externe 15, 16, et elle a une dimension légèrement inférieure à la section dudit trou oblong 17, 18. Les excroissances axiales 37 et 38 permettent d'éviter tout contact métallique entre les pièces fixes et les pièces mobiles lors d'un choc.

L'écrou 51 correspondant vient se visser sur l'extrémité filetée 43 de la tige de tenue 41 correspondante, en s'appliquant contre la face d'appui 34 de la deuxième capsule d'absorption d'énergie 32. Le réglage du serrage des deux capsules d'absorption d'énergie 31, 32 contre la face supérieure 19, 20 et contre la face inférieure 21, 22 de l'aile externe correspondante 15, 16 se fait au moyen du serrage à la valeur désirée de l'écrou 51, la tige de tenue 41 étant immobilisée en rotation au moyen du trou de manoeuvre 45. Chaque vis de fixation 53 avec sa tige 54 et sa partie filetée 57 vient ensuite bloquer cet ensemble sur l'élément support fixe 8 et la structure du véhicule 10. La tête 55 de la vis de fixation 53 qui peut être hexagonale vient s'appliquer par sa face d'appui 56 contre la portion de manoeuvre 44 par l'intermédiaire d'une rondelle conique 58, afin de maintenir un enroulement élastique d'absorption d'énergie 59 correspondant qui a été préalablement monté sur la portée cylindrique circulaire constituant la périphérie de ladite portion de manoeuvre 44, afin de guider ledit enroulement 59.

Le blocage de la vis de fixation 53 s'effectue par l'intermédiaire de la face d'appui 48 de l'extrémité filetée 50 qui vient s'appliquer contre la face inférieure 24 de l'élément support fixe 8, dont la face supérieure 23 vient s'appliquer contre la structure 10 du véhicule.

Ainsi, les moyens d'assemblage sont indépendants du moyen de fixation correspondant de manière à effectuer le réglage du serrage pour avoir le serrage voulu desdits moyens d'assemblage en vue d'obtenir l'absorption d'énergie demandée, c'est-à-dire que le réglage dudit serrage des capsules d'absorption d'énergie 31 et 32 est indépendant de la valeur du serrage dudit moyen de fixation 53 de l'ensemble support 7 sur la structure 10 du véhicule.

Les deux capsules 31 et 32 disposées de chaque côté de la patte en U de l'élément support mobile 9 sont traversées par une tige 41 munie d'un épaulement 42 dont le diamètre extérieur est sensiblement égal au diamètre extérieur des capsules 31 et 32 et le diamètre intérieur sensiblement égal au diamètre intérieur des capsules 31 et 32.

Dans le prolongement du diamètre extérieur servant de centreur auxdites capsules 31 et 32, il est réalisé le filetage à pas fin 43 qui permet d'ajuster le serrage de l'écrou 51 en fonction de l'effort de glissement souhaité.

Le dimensionnement de chacune des tiges 41 permet de fixer la colonne de direction sur le véhicule par des vis de fixation 53 traversant lesdites tiges 41 sans affecter l'effort de glissement de la patte en U préalablement taré.

Dans le mode de réalisation représenté sur les figures, les moyens de fixation, les capsules d'absorption d'énergie et les moyens d'assemblage desdites capsules sont identiques pour chacun des deux axes de fixation 5 et 6.

## Revendications

1. Dispositif de réglage d'un système d'absorption d'énergie d'une colonne de direction de véhicule automobile, ladite colonne de direction étant montée dans un ensemble support (7) qui est relié et solidarisé à la structure du véhicule (10) par plusieurs moyens de fixation ayant chacun un axe de fixation respectif (5, 6), **caractérisé en ce qu'**au moins l'un desdits moyens de fixation comporte au moins une capsule d'absorption d'énergie (31, 32) qui est disposée dans ledit ensemble support (7) selon son axe de tenue, et qui est serrée dans ledit ensemble support (7) à l'aide de moyens d'assemblage, l'axe de fixation et l'axe de tenue (5, 6) coïncidant, et lesdits moyens d'assemblage sont indépendants dudit moyen de fixation respectif de manière à effectuer le réglage du serrage pour avoir le serrage voulu desdits moyens d'assemblage en vue d'obtenir l'absorption d'énergie demandée, le réglage du serrage de ladite au moins une capsule d'absorption d'énergie (31, 32) étant indépendant de la valeur du serrage dudit moyen de fixation de l'ensemble support sur la structure du véhicule.

2. Dispositif de réglage selon la revendication 1, **caractérisé en ce qu'**au moins l'un des moyens de fixation comporte deux capsules d'absorption d'énergie (31, 32).

3. Dispositif de réglage selon la revendication 1 ou 2, **caractérisé en ce que** les moyens d'assemblage comportent une tige de tenue (41), ladite tige de tenue (41) étant munie à une extrémité (49) d'un épaulement (42) et à son autre extrémité (50) d'une partie filetée (43), qui reçoit un écrou (51) afin de serrer à la valeur demandée ladite au moins une capsule d'absorption d'énergie (31, 32) sur l'ensemble support (7), ladite au moins une capsule d'absorption d'énergie (31, 32) est munie d'un trou de passage (39, 40) de la tige de tenue (41) afin de pouvoir être montée sur ladite tige de tenue (41) entre l'épaulement (42) et l'écrou (51), et ladite tige de tenue (41) est traversée par un trou de passage (46) du moyen de fixation correspondant de l'ensemble support (7) sur la structure du véhicule (10).

4. Dispositif de réglage selon la revendication 3, **caractérisé en ce que** la tige de tenue (41) a une section circulaire dont le diamètre est légèrement inférieur au diamètre du trou de passage (39, 40) de ladite au moins une capsule d'absorption d'énergie (31, 32) qui est centrée sur ladite tige de tenue (41), l'épaulement (42) a une section en forme de couronne circulaire dont le diamètre extérieur est sensiblement égal au diamètre extérieur de la périphérie circulaire de ladite au moins une capsule d'absorption d'énergie (31, 32) et dont le diamètre intérieur est sensiblement égal au diamètre du trou de passage (39, 40) de ladite au moins une capsule (31, 32), et ladite tige de tenue (41) a une extrémité (50) avec un filetage à pas fin (43) qui reçoit un écrou (51) dont la section a un encombrement sensiblement égal à l'encombrement de l'épaulement (42), de manière à avoir la même surface de contact avec ladite au moins une capsule (31, 32) et l'écrou ou l'épaulement.

5. Dispositif de réglage selon la revendication 4, **caractérisé en ce que** la tige de tenue (41) se prolonge du côté de l'épaulement (42) par une portion de manoeuvre (44) avec au moins un trou de manoeuvre (45) sensiblement perpendiculaire à l'axe de tenue et l'axe de fixation (5, 6).

6. Dispositif de réglage selon la revendication 5, **caractérisé en ce que** la périphérie de la portion de manoeuvre (44) consiste en une portée cylindrique circulaire, qui guide un enroulement correspondant d'absorption d'énergie (59).

7. Dispositif de réglage selon la revendication 6, **caractérisé en ce que** la tige de tenue (41), l'épaulement (42) et la portion de manoeuvre (44) constituent une seule et même pièce mécanique.

8. Dispositif de réglage selon l'une quelconque des revendications 3 à 7, **caractérisé en ce que** ladite au moins une capsule d'absorption d'énergie (31, 32) est munie d'une excroissance axiale (37, 38) pénétrant dans un trou (17, 18) correspondant de l'ensemble support (7) afin d'éviter tout contact métallique entre des pièces fixes et des pièces mobiles lors d'un choc.

9. Dispositif de réglage selon l'une quelconque des revendications 1 à 8, **caractérisé en ce qu'**au moins un moyen de fixation comporte deux capsules d'absorption d'énergie (31 et 32), chaque capsule (31, 32) étant disposée contre la face correspondante (19, 21) appartenant à l'ensemble support (7).

10. Dispositif de réglage selon la revendication 9, **caractérisé en ce que** la colonne de direction comprend un arbre de direction (1) monté tournant autour d'un axe de direction (3) dans un tube-corps (2), ledit tube-corps (2) est disposé entre deux montants (11, 12) reliés par un élément de raccordement (13), les deux montants (11, 12) et l'élément de raccordement (13) faisant partie de l'ensemble support (7), les deux montants (11, 12) étant sensiblement parallèles au plan vertical (4) passant par l'axe de direction (3), **caractérisé en ce que** chaque montant (11, 12) comporte une aile externe (15, 16) qui est sensiblement perpendiculaire au montant (11, 12) correspondant, sur chacune des ailes externes (15, 16) est aménagé un trou oblong (17, 18), dont l'axe de la section transversale est l'axe de serrage des capsules d'absorption d'énergie correspondantes, ledit trou oblong (17, 18) ayant une forme qui est allongée parallèlement au montant correspondant (11, 12) afin de permettre le déplacement voulu en cas de choc de l'élément support mobile (9).

11. Dispositif de réglage selon la revendication 10, **caractérisé en ce que** chacun des deux trous oblongs (17, 18) est débouchant du côté d'un volant de direction (25).

12. Dispositif de réglage selon la revendication 10 ou 11, **caractérisé en ce que** les ailes externes (15, 16) appartiennent à une seule et même embase (14) qui est solidarisée par soudure à l'élément de raccordement (13) et à chacun des deux montants (11, 12).

13. Dispositif de réglage selon l'une quelconque des revendications précédentes, **caractérisé en ce que** les moyens de fixation de l'ensemble support sont des vis de fixation (53).

14. Dispositif de réglage selon l'une quelconque des revendications précédentes, **caractérisé en ce que** pour les axes de fixation (5, 6), les moyens de fixation, ladite au moins une capsule d'absorption d'énergie et les moyens d'assemblage d sont identiques.

## Patentansprüche

1. Vorrichtung zur Steuerung eines Energieabsorptionssystems einer Kraftfahrzeug-Lenksäule, wobei die genannte Lenksäule auf einer Trägereinheit (7) montiert ist, die durch mehrere Befestigungsvorrichtungen mit jeweils einer Befestigungsachse (5, 6) fest mit der Karosserie des Fahrzeugs (10) verbunden ist, **dadurch gekennzeichnet, dass** mindestens eine der genannten Befestigungsvorrichtungen mindestens eine Kapsel zur Energieabsorption (31, 32) aufweist, die an der genannten Trägereinheit (7) entlang ihrer Trägerachse angeordnet ist und die mit Hilfe von Verbindungsvorrichtungen an der genannten Trägereinheit (7) eingespannt ist, wobei die Befestigungsachse und die Trägerachse (5, 6) sich decken und die genannten Verbindungsvorrichtungen unabhängig von der genannten jeweiligen Befestigungsvorrichtung sind, so dass eine Regelung der Befestigung durchgeführt werden kann, um die gewünschte Befestigung der genannten Verbindungsvorrichtungen im Hinblick auf das Erzielen der gewünschten Energieabsorption zu gewährleisten, wobei die Regelung der Befestigung der genannten, mindestens einen Kapsel zur Energieabsorption (31, 32) unabhängig vom Befestigungswert der genannten Befestigungseinrichtung der Trägereinheit an der Karosserie des Kraftfahrzeugs ist.

2. Steuervorrichtung nach Anspruch 1, **dadurch gekennzeichnet, dass** mindestens eine der Befestigungsvorrichtungen zwei Kapseln zur Energieabsorption (31, 32) aufweist.

3. Steuervorrichtung nach Anspruch 1 oder 2, **dadurch gekennzeichnet, dass** die Verbindungsvorrichtungen eine Trägerstange (41) aufweisen, wobei die genannte Trägerstange (41) an einem Ende (49) einen Vorsprung (42) aufweist und am anderen Ende (50) einen Gewindebereich (43), der eine Mutter (51) aufnimmt, um die genannte, mindestens eine Kapsel zur Energieabsorption (31, 32) mit dem gewünschten Wert an der Trägereinheit (7) zu befestigen, wobei die genannte, mindestens eine Kapsel zur Energieabsorption (31, 32) eine Durchgangsöffnung (39, 40) für die Trägerstange (41) aufweist, damit sie an der genannten Trägerstange (41) zwischen dem Vorsprung (42) und der Mutter (51) montiert werden kann, und wobei die genannte Trägerstange (41) eine Durchgangsöffnung (46) für die entsprechende Befestigungsvorrichtung der Trägereinheit (7) an der Fahrzeugkarosserie (10) aufweist.

4. Steuervorrichtung nach Anspruch 3, **dadurch gekennzeichnet, dass** die Trägerstange (41) einen kreisförmigen Abschnitt aufweist, dessen Durchmesser etwas geringer ist als der Durchmesser der Durchgangsöffnung (39, 40) der genannten, mindestens einen Kapsel zur Energieabsorption (31, 32), die mittig auf der genannten Trägerstange (41) angeordnet ist, wobei der Vorsprung (42) einen Abschnitt in Form eines runden Kranzes aufweist, dessen Außendurchmesser genau dem Außendurchmesser des kreisförmigen Umfangs der genannten, mindestens einen Kapsel zur Energieabsorption (31, 32) entspricht und dessen Innendurchmesser genau dem Durchmesser der Durchgangsöffnung (39, 40) der genannten, mindestens einen Kapsel (31, 32) entspricht, und die genannte Trägerstange (41) ein Ende (50) mit einem Feingewinde (43) aufweist, das eine Mutter (51) aufnimmt, deren Querschnitt genau die gleichen Abmessungen aufweist wie der Vorsprung (42), so dass die gleiche Kontaktfläche mit der genannten, mindestens einen Kapsel (31, 32) und der Mutter oder dem Vorsprung entsteht.

5. Steuervorrichtung nach Anspruch 4, **dadurch gekennzeichnet, dass** die Trägerstange (41) auf der Seite des Vorsprungs (42) durch einen Betätigungsabschnitt (44) mit mindestens einer Betätigungsöffnung (45), die genau senkrecht zur Trägerachse und zur Befestigungsachse (5, 6) verläuft, verlängert ist.

6. Steuervorrichtung nach Anspruch 5, **dadurch gekennzeichnet, dass** der Umfang des Betätigungsabschnitts (44) aus einer zylinderförmigen, runden Auflagefläche besteht, die eine entsprechende Wicklung zur Energieabsorption (59) führt.

7. Steuervorrichtung nach Anspruch 6, **dadurch gekennzeichnet, dass** die Trägerstange (41), der Vorsprung (42) und der Betätigungsabschnitt (44) aus dem gleichen mechanischen Bauteil bestehen.

8. Steuervorrichtung nach einem der Ansprüche 3 bis 7, **dadurch gekennzeichnet, dass** die genannte, mindestens eine Kapsel zur Energieabsorption (31, 32) eine axiale Ausstülpung (37, 38) aufweist, die in eine Öffnung (17, 18) der Trägereinheit (7) eindringt, um bei einem Schlag jeglichen Metallkontakt zwischen den festen und den beweglichen Bauteilen zu vermeiden.

9. Steuervorrichtung nach einem der Ansprüche 1 bis 8, **dadurch gekennzeichnet, dass** mindestens eine Befestigungsvorrichtung zwei Kapseln zur Energieabsorption (31 und 32) aufweist, wobei jede Kapsel (31, 32) an der entsprechenden Fläche (19, 21) der Trägereinheit (7) anliegt.

10. Steuervorrichtung nach Anspruch 9, **dadurch gekennzeichnet, dass** die Lenksäule eine Lenkwelle (1) aufweist, die drehbar um eine Lenkachse (3) in einer Röhre (2) befestigt ist, wobei die genannte Röhre (2) zwischen zwei Stützen (11, 12) angeordnet ist, die mit einem Verbindungselement (13) verbunden sind, wobei die beiden Stützen (11, 12) und das Verbindungselement (13) Bestandteil der Trägereinheit (7) sind und die beiden Stützen (11, 12) genau parallel zur Lotebene (4) durch die Lenkachse (3) verlaufen, **dadurch gekennzeichnet, dass** jede Stütze (11, 12) einen äußeren Flügel (15, 16) aufweist, der genau senkrecht zur entsprechenden Stütze (11, 12) verläuft, wobei auf jedem der äußeren Flügel (15, 16) eine längliche Öffnung (17, 18) angeordnet ist, deren Querschnittsachse der Befestigungsachse der entsprechenden Kapsel zur Energieabsorption entspricht, wobei die genannte längliche Öffnung (17, 18) eine Form aufweist, die parallel zur entsprechenden Stütze (11, 12) verläuft, um im Falle eines Schlags die gewünschte Verschiebung des beweglichen Trägerelements (9) zu ermöglichen.

11. Steuerelement nach Anspruch 10, **dadurch gekennzeichnet, dass** jede der beiden länglichen Öffnungen (17, 18) an der Seite eines Lenkrades (25) hervortritt.

12. Steuerelement nach Anspruch 10 oder 11, **dadurch gekennzeichnet, dass** die äußeren Flügel (15, 16) der gleichen Sitzfläche (14) angehören, die durch eine Schweißverbindung fest mit dem Verbindungselement (13) und mit jeder der beiden Stützen (11, 12) verbunden ist.

13. Steuervorrichtung nach einem der vorgenannten Ansprüche, **dadurch gekennzeichnet, dass** es sich bei den Befestigungsvorrichtungen der Trägereinheit um Befestigungsschrauben (53) handelt.

14. Steuervorrichtung nach einem der vorgenannten Ansprüche, **dadurch gekennzeichnet, dass** die Durchmesser der Befestigungsachsen (5, 6), der Befestigungsvorrichtungen, der genannten, mindestens einen Kapsel zur Energieabsorption und der Verbindungsvorrichtungen identisch sind.

## Claims

1. A device for adjusting an energy absorbing system of an automobile vehicle steering column, said steering column being mounted in a support assembly (7) which is connected to and attached to a structure of said vehicle (10) by plural fixing means each having a respective fixing axis (5, 6), **characterized in that** at least one of said fixing means includes at least one energy absorbing capsule (31, 32) which is disposed in said support assembly (7) on a retaining axis, and which is clamped in said support assembly (7) by fastening means, the fixing axis and the retaining axis (5, 6) coinciding, and said fastening means are independent of said one respective fixing means in order to allow adjustment to achieve a required clamping of said fastening means to obtain the required energy absorption, whereby adjustment of the clamping of said at least one energy absorbing capsule (31, 32) is independent of a clamping of said fixing means of the support assembly to the vehicle structure.

2. An adjusting device according to claim 1, **characterized in that** at least one of the fixing means includes two energy absorbing capsules (31, 32).

3. An adjusting device according to claim 1 or 2, **characterized in that** the fastening means include a retaining rod (41), said retaining rod (41) being provided at one end (49) with a shoulder (42) and at its other end (50) with a threaded portion (43), which receives a nut (51) adapted to clamp said at least one energy absorbing capsule (31, 32) to the support assembly (7) with the required force, said at least one energy absorbing capsule (31, 32) is provided with a hole through (39, 40) which the retaining rod (41) passes so that it is mounted on said retaining rod (41) between the shoulder (42) and the nut (51), and said retaining rod (41) has a hole through (46) it for the corresponding fixing means of the support assembly (7) to the vehicle structure (10).

4. An adjusting device according to claim 3, **characterized in that** the retaining rod (41) has a circular section whose diameter is slightly less than the diameter of the hole through (39, 40) said at least one energy absorbing capsule (31, 32) which is centered on said retaining rod (41), the shoulder (42) has a circular ring section whose outside diameter is substantially equal to the outside diameter of the circular periphery of said at least one energy absorbing capsule (31, 32) and whose inside diameter is substantially equal to the diameter of the hole through (39, 40) said at least one energy absorbing capsule (31, 32), and said retaining rod (41) has at one end (50) a fine pitch thread (43) which receives a nut (51) whose cross-section is substantially equal to the overall size of the shoulder (42), so as to have the same surface area of contact with said at least one energy absorbing capsule (31, 32) and the nut or the shoulder.

5. An adjusting device according to claim 4, **characterized in that** the retaining rod (41) is extended at the same end as the shoulder (42) by a handling portion (44) with at least one handling hole (45) substantially perpendicular to the retaining axis and the fixing axis (5, 6).

6. An adjusting device according to claim 5, **characterized in that** the periphery of the handling portion (44) is a circular cylindrical bearing surface, which guides a corresponding energy absorbing winding (59).

7. An adjusting device according to claim 6, **characterized in that** the retaining rod (41), the shoulder (42) and the handling portion (44) constitute one and the same mechanical part.

8. An adjusting device according to any one of claims 3 to 7, **characterized in that** said at least one energy absorbing capsule (31, 32) has an axial protuberance (37, 38) penetrating a corresponding hole (17, 18) in the support assembly (7) to prevent metallic contact between fixed parts and mobile parts in the event of an impact.

9. An adjusting device according to any one of claims 1 to 8, **characterized in that** at least one of the fixing means includes two energy absorbing capsules (31 and 32), each (31, 32) disposed against the corresponding face (19, 21) of the support assembly (7).

10. An adjusting device according to claim 9,
**characterized in that** the steering column comprises a steering shaft (1) rotatably mounted about a steering axis (3) in a body tube (2), said body tube (2) is disposed between two uprights (11, 12) connected by a connecting member (13), the two uprights (11, 12) and the connecting member (13) forming part of the support assembly (7), the two uprights (11, 12) being substantially parallel to the vertical plane (4) passing through the steering axis (3), **characterized in that** each upright (11, 12) has an external flange (15, 16) substantially perpendicular to the corresponding upright (11, 12), each of the external flanges (15, 16) having an oblong hole (17, 18), whose cross section axis is the clamping axis of the corresponding energy absorbing capsules, said oblong hole (17, 18) has a shape which is elongate parallel to the corresponding upright (11, 12) in order to allow the required movement of the mobile support member (9) in the event of an impact.

11. An adjusting device according to claim 10, **characterized in that** each of the two oblong holes (17, 18) is open at the same end as a steering wheel (25).

12. An adjusting device according to claim 10 or 11, **characterized in that** the external flanges (15, 16) are parts of a common base (14) which is connected by welding to the connecting member (13) and to each of the two uprights (11, 12).

13. An adjusting device according to any one of the preceding claims, **characterized in that** the fixing means of the support assembly are fixing bolts (53).

14. An adjusting device according to any one of the preceding claims, **characterized in that** for the fixing axes (5, 6), the fixing means, said at least one energy absorbing capsule and the fastening means are identical.
